# EUROPEAN PATENT APPLICATION

(11) **EP 4 575 955 A1**
(43) Date of publication of application: **25.06.2025**
(21) Application number: 24195372.8
(22) Date of filing: 20.08.2024
(51) Int. Cl.: G06Q 10/109, H04L 12/18, H04M 3/56, G10L 15/26

(54) **INTELLIGENCE MEETING ASSISTANCE SYSTEM AND METHOD FOR GENERATING MEETING MINUTES**

(30) Priority: 21.12.2023 US 202363613485 P; 08.03.2024 TW 113108512
(71) Applicant: MEGAFORCE COMPANY LIMITED, New Taipei City 236 (TW)
(72) Inventor: YEN, Chih-Han, 236 New Taipei City (TW); CHAO, Xiu-Lin, 236 New Taipei City (TW); CHEN, Tao-Cheng, 236 New Taipei City (TW)
(74) Representative: Viering, Jentschura & Partner mbB Patent- und Rechtsanwälte

(57) **Abstract**

An intelligent meeting assistance system (1) and a method for generating meeting minutes are provided. The intelligent meeting assistance system (1) includes an image capturing device (11) and an image analyzing device (12). The image capturing device (11) is configured to capture an image displayed by an interactive device (2) during a meeting. The image analyzing device (12) is coupled to the image capturing device (11), and is configured to execute an image analysis process on the image (4) to generate first meeting minutes that record image content.

## Description

### FIELD OF THE DISCLOSURE

The present invention relates to an assistance system, and more particularly to an intelligent meeting assistance system and a method for generating meeting minutes.

### BACKGROUND OF THE DISCLOSURE

An intelligent meeting assistant system essentially functions as a meeting assistant that can automatically generate meeting minutes. However, existing intelligent conference assistant systems only generate meeting minutes that record multiple speech contents based on audio data. Humans, however, are visual learners.

Therefore, it is highly likely that meeting presenters will use images with text and/or charts to explain information to meeting participants. That is to say, the existing intelligent meeting assistance system ignores non-audio image content, such that the non-audio image content cannot be reflected in the meeting minutes.

### SUMMARY OF THE DISCLOSURE

In response to the above-referenced technical inadequacies, the present invention provides an intelligent meeting assistance system and a method for generating meeting minutes, which can analyze images containing text and/or charts to generate meeting minutes that record the content of the images.

In order to solve the above-mentioned problems, one of the technical aspects adopted by the present invention is to provide an intelligent meeting assistance system, including an image capturing device and an image analyzing device. The image capturing device is configured to capture an image displayed by an interactive device during a meeting. The image analyzing device is coupled to the image capturing device, and is configured to execute an image analysis process on the image to generate first meeting minutes that record image content.

In order to solve the above-mentioned problems, another one of the technical aspects adopted by the present invention is to provide a method for generating meeting minutes, and the method includes following processes: configuring an image capturing device to capture an image displayed by an interactive device during a meeting; and configuring an image analyzing device to execute an image analysis process on the image to generate first meeting minutes that record image content.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:
FIG. 1 is a functional block diagram of an intelligent meeting assistance system according to one embodiment of the present invention;
FIG. 2 is a flowchart of a method for generating meeting minutes according to one embodiment of the present invention;
FIG. 3 is a flowchart of an image analyzing device being configured to execute an image analysis process on an image according to one embodiment of the present invention;
FIG. 4A is a functional block diagram of an optical character recognition circuit according to one embodiment of the present invention;
FIG. 4B is a functional block diagram of a chart recognition circuit according to one embodiment of the present invention;
FIG. 4C is a functional block diagram of an animation identification circuit according to one embodiment of the present invention;
FIG. 5 is a functional block diagram of a speech recognition circuit according to one embodiment of the present invention;
FIG. 6A is a schematic diagram showing the intelligent meeting assistant system displaying speech content in a transcript mode according to one embodiment of the present invention;
FIG. 6B is a schematic diagram showing the intelligent conference assistance system displaying speech content in a recap mode according to one embodiment of the present invention; and
FIG. 6C is a schematic diagram showing the intelligent meeting assistance system displaying a conference summary in a summary mode according to one embodiment of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

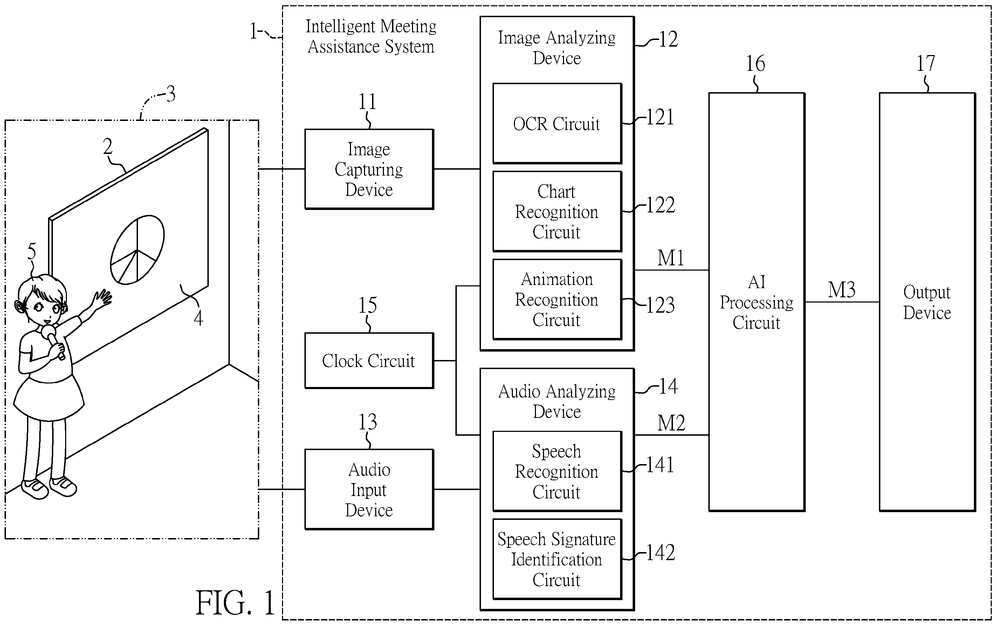

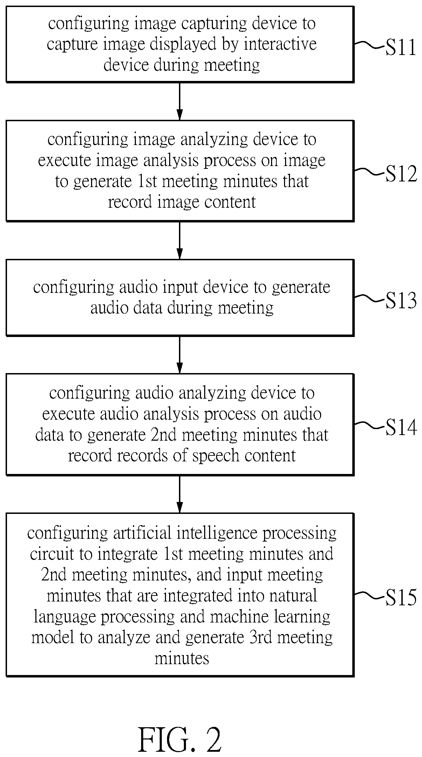

Reference is made to FIGS. 1 and 2. FIG. 1 is a functional block diagram of an intelligent meeting assistance system according to one embodiment of the present invention, and FIG. 2 is a flowchart of a method for generating meeting minutes according to one embodiment of the present invention. As shown in FIG. 1, the intelligent meeting assistance system 1 of this embodiment includes an image capturing device 11 and an image analyzing device 12. Specifically, the image capturing device 11 is configured to capture an image 4 displayed by an interactive device 2 during a meeting. In addition, the image analyzing device 12 is coupled to the image capturing device 11 and is configured to execute an image analysis process on the image 4 to generate first meeting minutes M1 that record image content (not shown in FIG. 1).

For example, the interactive device 2 can be a touch screen in a meeting environment 3, and can be configured to display a slide containing text and/or charts during the meeting, such that a conference presenter 5 can explain information to conference participants (not shown in FIG. 1). In this case, the image 4 captured by the image capturing device 11 can be a slide containing text and/or charts, and the image analyzing device 12 can execute an image analysis process on the slides containing the text and/or the charts to generate the first meeting minutes M1 that record the image content of the slides. However, the present invention is not limited to the above examples.

As shown in FIG. 2, according to the above descriptions, the method for generating meeting minutes of the present embodiment is executed by the intelligent meeting assistant system 1 and includes the following steps.

Step S 11: configuring the image capturing device to capture the image displayed by the interactive device during the meeting. Specifically, the image capturing device 11 can be implemented by hardware (e.g., a lens and an imaging medium) in combination with software and/or firmware. However, the present invention does not limit a specific implementation of the image capturing device 11.

Step S12: configuring an image analyzing device to execute an image analysis process on the image to generate the first meeting minutes that record image content. Similarly, the image analyzing device 12 can be implemented by hardware (e.g., a central processing unit and a memory) in combination with software and/or firmware. However, the present invention does not limit a specific implementation of the image analyzing device 12.

Furthermore, the image content recorded in the first meeting minutes M1 includes one or a combination of text content and chart content of the image 4, and the image analysis process executed by the image analyzing device 12 includes a text recognition process and a chart recognition process. Therefore, as shown in FIG. 1, the image analyzing device 12 can include an optical character recognition circuit 121 and a chart recognition circuit 122.

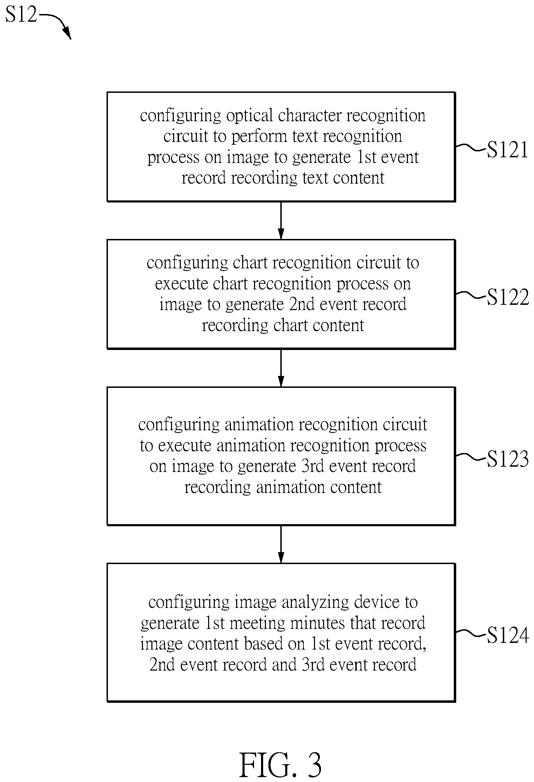

The optical character recognition circuit 121 is configured to perform a text recognition process on the image 4 to generate a first event record that records the text content. However, the first event record is not shown in FIG. 1. In addition, the chart recognition circuit 122 is configured to perform a chart recognition process on the image 4 to generate a second event record that records the chart content. Similarly, the second event record is not shown in FIG. 1. Referring to FIG. 3, FIG. 3 is a flowchart of an image analyzing device being configured to execute an image analysis process on an image according to one embodiment of the present invention.

As shown in FIG. 3, according to the above descriptions, step S12 of this embodiment can include the following steps.

Step S121: configuring the optical character recognition circuit to perform the text recognition process on the image to generate the first event record that records the text content. Specifically, text on the image 4 can include one or a combination of printed text arranged using modern computer fonts and handwritten text written by a meeting presenter 5 on the interactive device 2 (e.g., a touch screen). Therefore, the text content recorded in the first event record can include one or a combination of printed text content and handwritten text content of the image 4, and the optical character recognition circuit 121 executes the text recognition process on the image 4 to recognize the printed text content and the handwritten text content of the image 4, thereby generating the first event record that records the text content.

Step S 122: configuring the chart recognition circuit to execute the chart recognition process on the image to generate the second event record that records the chart content. Specifically, the chart in the image 4 can include one or a combination of a pie chart, a line chart, and a bar chart. Therefore, the chart content recorded in the second event record can include one or a combination of the pie chart content, line chart content and bar chart content on the image 4, and the chart recognition circuit 122 executes the chart recognition process on the image 4 to recognize pie chart content, line chart content and bar chart content of the image 4, thereby generating the second event record that records the chart content.

Similarly, the pie chart, the line chart and/or the bar chart in the image 4 can be created using a charting application on a modem computer or can be drawn by the meeting presenter 5 on the interactive device 2 (e.g., a touch screen). That is to say, according to the above descriptions, the intelligent meeting assistance system 1 and the method for generating the meeting minutes of the present embodiment can further capture and record the content written and drawn by the meeting presenter 5 on the interactive device 2, such that the generated meeting minutes can more accurately reflect all behaviors in the meeting.

On the other hand, the conference presenter 5 can also utilize an animation function on the image 4 (e.g., through the slide) to interact with meeting participants. For example, the animation function can be performed to arrange various tracks and/or various transition effects for the text content and the chart content, including actions such as move, rotate, appear and/or disappear. Therefore, the image analysis process executed by the image analyzing device 12 can further include an animation recognition process for identifying the above-mentioned actions, and the image content recorded in the first meeting minutes M1 can include one or a combination of text content, chart content and animation content of the image 4. Therefore, as shown in FIG. 1, the image analyzing device 12 can further include an animation recognition circuit 123.

The animation recognition circuit 123 is configured to execute the animation recognition process on the image 4 to generate a third event record that records the animation content. In some embodiments, the above-mentioned related content displayed by the animation is usually a key point of the meeting that the meeting presenter 5 wants to emphasize. Therefore, in the method of generating the meeting minutes provided by the present invention, the identified animation content will be considered as a key part of the meeting and presented in the third event record (for example, by assigning weights). However, the third event record is not shown in FIG. 1. In addition, the image analyzing device 12 can be further configured to generate the first meeting minutes M1 that record the image content based on the first event record, the second event record, and the third event record. That is, as shown in FIG. 3, step S12 of this embodiment can further include the following steps.

Step S123: configuring the animation recognition circuit to execute the animation recognition process on the image to generate the third event record that records the animation content.

Step S124: configuring the image analyzing device to generate the first meeting minutes that record the image content based on the first event record, the second event record and the third event record.

It should be noted that the present invention does not limit a specific form of the image content recorded in the first meeting minutes M1. For example, the first meeting minutes M1 of this embodiment can record the text content, the chart content and the dynamic display content of the image 4 in the form of text. In addition, the first meeting minutes M1 of the present embodiment can also record the chart content of the image 4 in the form of a recreated chart. However, the present invention is not limited to the above examples.

On the other hand, as shown in FIG. 1, the intelligent meeting assistance system 1 of this embodiment can further include an audio input device 13 and an audio analyzing device 14. The audio input device 13 is configured to generate audio data during the conference, but the audio data is not shown in FIG. 1. In addition, the audio analyzing device 14 is coupled to the audio input device 13 and is configured to execute an audio analysis process on the audio data to generate second meeting minutes M2 that record a plurality of records of speech content. That is, as shown in FIG. 2, the method of this embodiment can further include the following steps.

Step S13: configuring the audio input device to generate audio data during the meeting. Specifically, the audio input device 13 can be configured to execute a recording process during the meeting to generate the audio data. In addition, the audio input device 13 can be implemented by hardware (e.g., a microphone) combined with software and/or firmware. However, the present invention does not limit a specific implementation of the audio input device 13.

Step S14: configuring the audio analyzing device to execute an audio analysis process on the audio data to generate the second meeting minutes that record a plurality of records of speech content. Specifically, the audio analysis process executed by the audio analyzing device 14 can include a speech recognition process and a speech signature identification process. Therefore, the audio analysis device 14 can include a speech recognition circuit 141 and a speech signature identification circuit 142 to respectively execute the speech recognition process and the speech signature identification process, such that the audio analyzing device 14 generates the second meeting minutes M2 that records multiple records of the speech content.

Similarly, the speech recognition circuit 141 and the speech signature identification circuit 142 can be implemented by hardware (e.g., a central processing unit and a memory) in combination with software and/or firmware. However, the present invention does not limit specific implementations of the speech recognition circuit 141 and the speech signature identification circuit 142. Since operating principles of the speech recognition circuit 141 and the speech signature identification circuit 142 are already known to those skilled in the art, the details of the speech analyzing device 14 will not be described in detail.

Furthermore, the meeting presenter 5 can use more than one image 4 (e.g., multiple slides) during the meeting to explain information to meeting participants. Therefore, the image capturing device 11 of the present embodiment can be further configured to sequentially capture multiple ones of the image 4 displayed by the interactive device 2 during the meeting, and the image analyzing device 12 generates the first meeting minutes M1 that records multiple records of the image content. It should be understood that the multiple records of the image content recorded in the first meeting minutes M1 correspond to the multiple ones of the image 4 captured by the image capturing device 11, respectively.

In this embodiment, the image capturing device 11 can be configured to capture multiple ones of the image 4 sequentially according to a sampling frequency, but the present invention is not limited thereto. In other embodiments, the image capturing device 11 can be further configured to capture a new image 4 when the image 4 is updated (for example, the meeting presenter 5 switches to another slide to explain information to the meeting participants, or the meeting presenter 5 writes and/or draws charts on the interactive device 2), but the present invention is not limited thereto.

It should also be understood that each record of the image content can be associated with at least one record of the speech content recorded in the second meeting minutes M2. Therefore, in order to establish a correlation and a sequence of multiple records of the image content and multiple records of the speech content, the image analyzing device 12 can also be configured to add a timestamp to each record of the image content recorded in the first meeting minutes M 1, and the audio analyzing device 14 can also be configured to add a timestamp to each record of the speech content recorded in the second meeting minutes M2.

According to the above descriptions, since each record of the image content recorded in the first meeting minutes M1 can include one or a combination of the text content, the chart content and the animation content, adding the timestamp to each record of the image content can also mean adding the timestamp to the text content, the chart content and/or the animation content of each record of the image content. Therefore, the intelligent meeting assistance system 1 of the present embodiment can further include a clock circuit 15.

The clock circuit 15 is coupled to the image analyzing device 12 and the audio analysis device 14 and is used to generate the timestamp. That is, the first meeting minutes M1 and the second meeting minutes M2 generated by the image analyzing device 12 and the audio analyzing device 14 can both use the timestamp generated by the clock circuit 15 to record a time point when each record of the image content and each record of the speech content appear.

Furthermore, the intelligent meeting assistance system 1 of this embodiment can further include an artificial intelligence (AI) processing circuit 16. The artificial intelligence processing circuit 16 is coupled to the image analyzing device 12 and the audio analyzing device 14, and receives the first meeting minutes M1 and the second meeting minutes M2. Specifically, the artificial intelligence processing circuit 16 is configured to integrate the first meeting minutes M1 and the second meeting minutes M2, and input integrated meeting minutes into a natural language processing (NLP) and machine learning model to analyze and generate comprehensive third meeting minutes M3.

In other words, the intelligent meeting assistance system 1 of the present embodiment can combine text recognition, chart recognition and speech recognition to generate the first meeting minutes M1 and the second meeting minutes M2 that respectively record the image content and the speech content, and integrate the first meeting minutes M1 and the second meeting minutes M2 through the timestamp. Next, the intelligent meeting assistant system 1 of this embodiment can use the NLP and machine learning model to further analyze the integrated meeting minutes.

Basically, through the NLP and machine learning model, the artificial intelligence processing circuit 16 can better understand the image content and the speech content recorded in the first meeting minutes M1 and the second meeting minutes M2, correct and supplement the recorded content that is erroneous and incomplete, and then extract and organize contextual information to generate the comprehensive third meeting minutes M3. That is to say, the third meeting minutes M3 will record all the image content and the speech content, and all the image content and the speech content will be reflected in the third meeting minutes M3 in sequence. According to the above descriptions, as shown in FIG. 2, the method of this embodiment can further include the following steps.

Step S15: configuring the artificial intelligence processing circuit to integrate the first meeting minutes and the second meeting minutes, and input the meeting minutes that are integrated into the natural language processing and machine learning model to analyze and generate the third meeting minutes.

The following will further explain how the artificial intelligence processing circuit 16 corrects and supplements the recorded content that is erroneous and incomplete. However, the present invention is not limited to the following examples. For example, a certain image content recorded in the first meeting minutes M1 can be a handwritten text content of "U8B", but in fact the meeting presenter 5 wrote the handwritten text content of "USB" on the interactive device 2 at this time. In other words, the character recognition error causes the first meeting minutes M1 to record incorrect text content.

Then, according to the timestamp, the artificial intelligence processing circuit 16 can find at least one record of the speech content associated with the aforementioned image content when integrating the first meeting minutes M1 and the second meeting minutes M2, and the meeting presenter 5 explains the universal serial bus (USB) to the meeting participants in the at least one record of the speech content. Therefore, through the NLP and machine learning models, the artificial intelligence processing circuit 16 can understand that the aforementioned handwritten text content should be "USB" instead of "U8B", such that the artificial intelligence processing circuit 16 can also correct the aforementioned handwritten text content.

On the other hand, another image recorded in the first meeting minutes M1 can be a pie chart of "support rates of candidates." That is, there is a pie chart reflecting the "candidate support rates" on the image 4, but the chart recognition circuit 122 is unable to successfully identify which candidate's support rate each sector on the pie chart represents, resulting in the first meeting minutes M1 recording incomplete content for the pie chart.

Similarly, based on the timestamp, the artificial intelligence processing circuit 16 can find at least one record of the speech content associated with the aforementioned image content, and the meeting presenter 5 explains to the meeting participants which candidate's support rate each sector on the pie chart represents in the at least one record of the speech content. Therefore, through the NLP and machine learning model, the artificial intelligence processing circuit 16 can also supplement the incomplete content for the aforementioned pie chart.

Furthermore, the artificial intelligence processing circuit 16 can also be configured to output real-time third meeting minutes M3. Therefore, the intelligent meeting assistance system 1 of this embodiment can further include an output device 17. The output device 17 is coupled to the artificial intelligence processing circuit 16 and can be configured to store and/or display the third meeting minutes M3. For example, the output device 17 can be a smart phone, a laptop, an external storage device, or a set-top box, but the present invention is not limited thereto. Similarly, the present invention does not limit specific forms of the image content and the speech content recorded in the third meeting minutes M3.

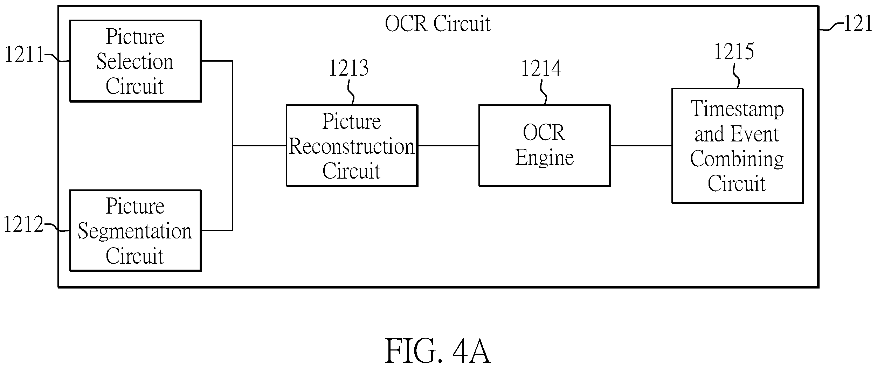

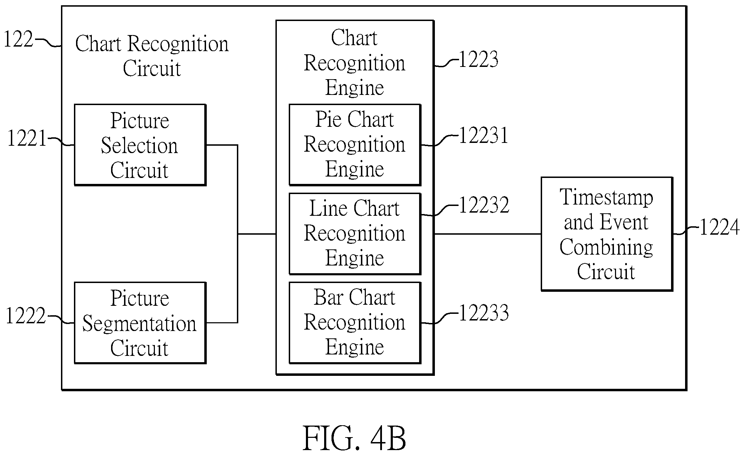

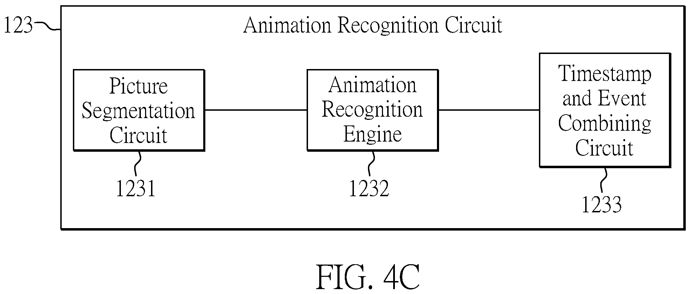

Next, the following describes an implementation of the optical character recognition (OCR) circuit 121, the chart recognition circuit 122, and the animation recognition circuit 123 through specific embodiments, but the present invention is not limited thereto. Reference is made to FIGS. 4A to 4C. FIG. 4A is a functional block diagram of an optical character recognition circuit according to one embodiment of the present invention, FIG. 4B is a functional block diagram of a chart recognition circuit according to one embodiment of the present invention, and FIG. 4C is a functional block diagram of an animation identification circuit according to one embodiment of the present invention.

As shown in FIG. 4A, the optical character recognition circuit 121 can include a picture selection circuit 1211, a picture segmentation circuit 1212, a picture reconstruction circuit 1213, and an optical character recognition (OCR) engine 1214 to generate a first event record that records the text content. However, the first event record is not shown in FIG. 4A. Since the application principle of the text recognition is already known to those skilled in the art, details of the picture selection circuit 1211, the picture segmentation circuit 1212, the picture reconstruction circuit 1213 and the optical character recognition engine 1214 will not be described in detail.

It should be noted that, since the image analyzing device 12 can be configured to add the timestamp to the text content, the chart content and/or the animation content of each image content, the optical character recognition circuit 121 can also include a timestamp and event combining circuit 1215. The timestamp and event combining circuit 1215 is coupled to the optical character recognition engine 1214 and is configured to add the timestamp to the text content recorded in the first event record.

As shown in FIG. 4B, the chart recognition circuit 122 can include a picture selection circuit 1221, a picture segmentation circuit 1222, and a chart recognition engine 1223 to generate a second event record that records the chart content. However, the second event record is not shown in FIG. 4B. Since the application principle of the text recognition is already known to those skilled in the art, details of the picture selection circuit 1221, the picture segmentation circuit 1222, the chart recognition engine 1223 and the chart recognition engine 1224 will not be described in detail.

It should be noted that, since the chart recognition circuit 122 recognizes the pie chart content, the line chart content and the bar chart content on the image 4, the chart recognition engine 1223 can further include a pie chart recognition engine 12231, a line chart recognition engine 12232 and a bar chart recognition engine 12233. Since the application principles of pie chart recognition, line chart recognition and bar chart recognition are already known to those skilled in the art, details of the pie chart recognition engine 12231, the line chart recognition engine 12232 and the bar chart recognition engine 12233 will not be described in detail.

Similarly, since the image analyzing device 12 can be configured to add the timestamp to the text content, the chart content and/or the animation content of each record of the image content, the chart recognition circuit 122 can also include a timestamp and event combining circuit 1224. The timestamp and event combining circuit 1224 is coupled to the chart recognition engine 1223 and is configured to add the timestamp to the chart content recorded in the second event record.

As shown in FIG. 4C, the animation recognition circuit 123 can include a picture segmentation circuit 1231 and an animation recognition engine 1232 to generate a third event record that records the animation content. However, the third event record is not shown in FIG. 4C. Since the application principle of animation recognition is already known to those skilled in the art, the details of the picture segmentation circuit 1231 and the animation recognition engine 1232 will not be described in detail.

Similarly, since the image analyzing device 12 can be configured to add the timestamp to the text content, the chart content and/or the animation content of each record of the image content, the animation recognition circuit 123 can also include a timestamp and event combining circuit 1233. The timestamp and event combining circuit 1233 is coupled to the animation recognition engine 1232 and is configured to add the timestamp to the animation content recorded in the third event record. It should be noted again that the present invention does not limit specific implementations of the optical character recognition circuit 121, the chart recognition circuit 122 and the animation recognition circuit 123.

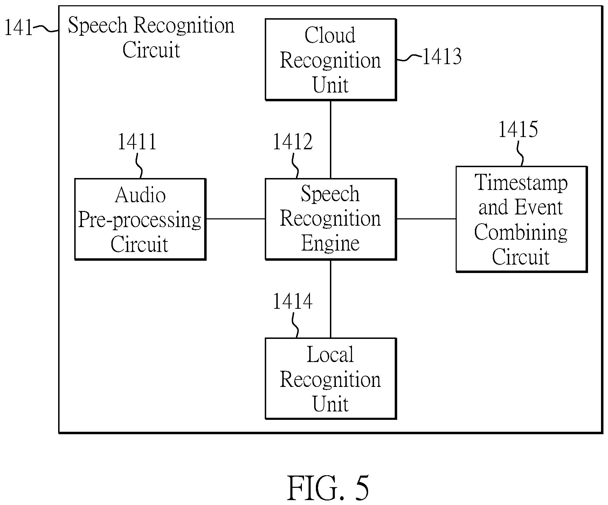

On the other hand, the following is an explanation of an implementation of the speech recognition circuit 141 through a specific embodiment, but the present invention is not limited thereto. Referring to FIG. 5, FIG. 5 is a functional block diagram of a speech recognition circuit according to one embodiment of the present invention.

As shown in FIG. 5, the speech recognition circuit 141 can include an audio pre-processing circuit 1411, a speech recognition engine 1412, a cloud recognition unit 1413, and a local recognition unit 1414. Since an application principle of speech recognition is already known to those skilled in the art, details of the audio pre-processing circuit 1411, the speech recognition engine 1412, the cloud recognition unit 1413 and the local recognition unit 1414 will not be described in detail.

Similarly, the speech recognition circuit 141 can further include a timestamp and event combining circuit 1415. The timestamp and event combining circuit 1415 is coupled to the speech recognition engine 1412 and is configured to add the timestamp to the speech content.

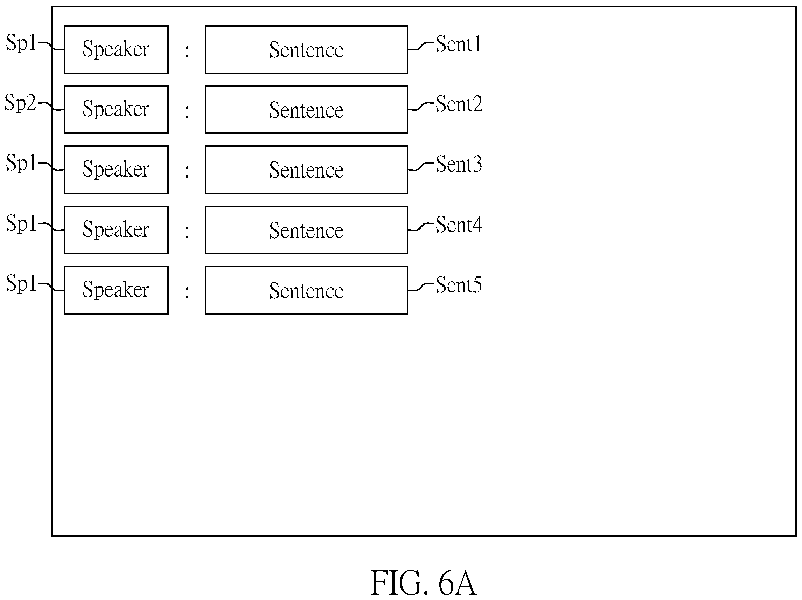

Furthermore, the intelligent meeting assistant system 1 can display the speech content, the text content and the chart content in a transcript mode or a recap mode. FIG. 6A is a schematic diagram showing the intelligent meeting assistant system displaying the speech content in the transcript mode according to one embodiment of the present invention. As shown in FIG. 6A, each record of the speech content can include a sentence, therefore, in the transcript mode, multiple sentences (e.g., Sent1 to Sent5) can be displayed on a screen of the output device 17 in real time and arranged in chronological order.

In addition, when there are multiple speakers, the speech recognition circuit 141 can also identify the speaker of each sentence. For example, each sentence of the present embodiment can correspond to speakers Sp1 or Sp2, and the speakers Sp1 and Sp2 can be the meeting presenter 5 and a certain conference participant, respectively, but the present invention is not limited thereto. Therefore, as shown in FIG. 6A, in the transcript mode, the intelligent meeting assistance system 1 can display the corresponding speaker for each sentence.

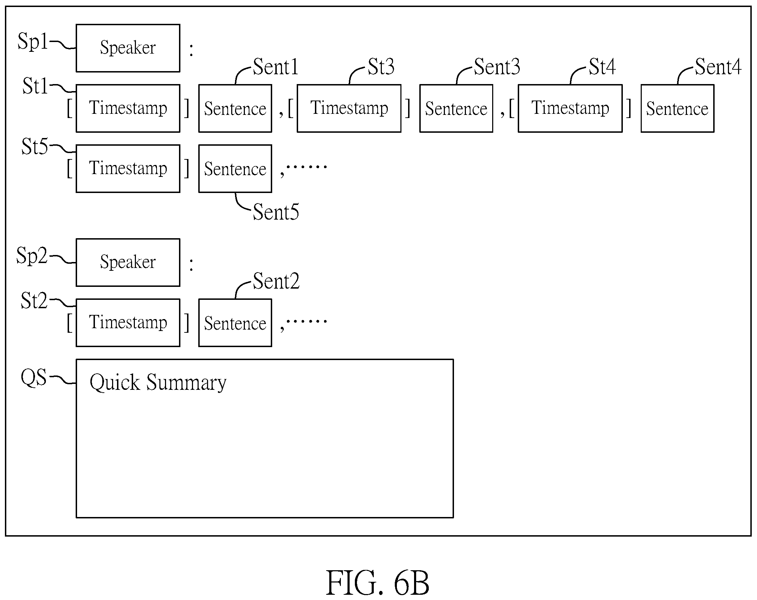

Referring to FIG. 6B, FIG. 6B is a schematic diagram showing the intelligent meeting assistant system displaying the speech content in the transcript mode according to one embodiment of the present invention. As shown in FIG. 6B, in the recap mode, the intelligent meeting assistant system 1 can display all sentences of the same speaker. In addition, as mentioned above, the audio analyzing device 14 can also be configured to add the timestamp to each record of the speech content. Therefore, the sentences Sent1 to Sent5 of the present embodiment can correspond to the timestamps St1 to St5, respectively, and in the recap mode, the intelligent meeting assistance system 1 can also display the timestamp of each sentence.

Furthermore, the artificial intelligence processing circuit 16 can also edit, aggregate, customize and optimize the meeting minutes to generate a quick summary that is more concise. Therefore, in the recap mode, the intelligent meeting assistance system 1 can also display a quick summary QS generated by the artificial intelligence processing circuit 16 to help the user review the entire meeting.

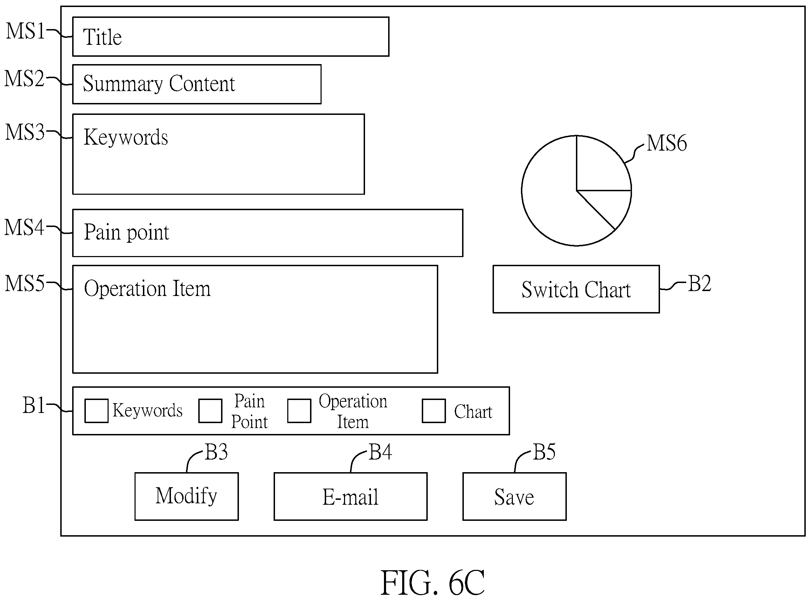

On the other hand, compared to the quick summary, the artificial intelligence processing circuit 16 can also generate a meeting summary that is more complete. Therefore, the intelligent meeting assistance system 1 can also display the meeting summary generated by the artificial intelligence processing circuit 16 in a summary mode. Referring to FIG. 6C, FIG. 6C is a schematic diagram showing the intelligent meeting assistance system displaying a conference summary in the summary mode according to one embodiment of the present invention.

As shown in FIG. 6C, the artificial intelligence processing circuit 16 can edit, summarize and optimize the meeting minutes to generate a meeting summary including a title MS1, summary content MS2, a keyword MS3, a pain point MS4, an operation item MS5 and a chart MS6. Therefore, in the summary mode, the screen of the output device 17 can display the title MS1, the summary content MS2, the keyword MS3, the pain point MS4, the operation item MS5 and the chart MS6 of the meeting summary. In this embodiment, the chart MS6 of the meeting summary will be shown as a pie chart, but the present invention is not limited thereto.

Furthermore, the output device 17 can provide a graphical user interface including a check box B 1, allowing the user to decide whether to display the keyword MS3, the pain point MS4, the operation item MS5 and the chart MS6 of the meeting summary. In addition, the graphical user interface provided by the output device 17 can further include a button B2 with the text "Switch Chart" thereon, and in response to the button B2 being pressed, the user can switch a type of the chart MS6. Similarly, the graphical user interface provided by the output device 17 can also include buttons B3, B4 and B5 with the words "Edit", "Email" and "Save" thereon, and in response to the button B3, B4 or B5 being pressed, the user can edit the meeting summary, send the meeting summary by email or save the meeting summary.

In conclusion, in the intelligent meeting assistance system and the method for generating meeting minutes provided by the present invention, meeting minutes that record image contents can be generated by virtue of "capturing the image displayed by the interactive device during the meeting" and "executing the image analysis process on the image."

Furthermore, in the intelligent meeting assistance system and the method for generating meeting minutes provided by the present invention, the image content in addition to the speech content can be recorded, and more particularly, the content written and drawn by the conference presenter on the interactive device can be captured and recorded, such that the generated meeting minutes can more accurately reflect all behaviors in the meeting. In addition, in the intelligent meeting assistance system and the method for generating meeting minutes provided by the present invention, the speech content, the text content and the chart content can be integrated to generate comprehensive meeting minutes, and erroneous and incomplete recorded content can be corrected and supplemented through the natural language processing and machine learning model, so as to generate meeting minutes with better quality.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

## Claims

1. An intelligent meeting assistance system (1), **characterized by** comprising:
an image capturing device (11) configured to capture an image (4) displayed by an interactive device (2) during a meeting; and
an image analyzing device (12) coupled to the image capturing device (11), wherein the image analyzing device (12) is configured to execute an image analysis process on the image (4) to generate first meeting minutes that record an image content.

2. The intelligent meeting assistance system (1) according to claim 1, wherein the image content includes one or a combination of a text content and a chart content of the image (4), and the image analysis process includes a text recognition process and a chart recognition process.

3. The intelligent meeting assistance system (1) according to claim 2, wherein the image analyzing device (12) includes:
an optical character recognition circuit (121) configured to perform the text recognition process on the image (4) to generate a first event record that records the text content; and
a chart recognition circuit (122) configured to execute the chart recognition process on the image (4) to generate a second event record that records the chart content.

4. The intelligent meeting assistance system (1) according to claim 3, wherein the text content includes one or a combination of a printed text content and a handwritten text content of the image (4), and the optical character recognition circuit (121) executes the text recognition process on the image (4) to recognize the printed text content and the handwritten text content of the image (4).

5. The intelligent meeting assistance system (1) according to claim 3, wherein the chart content includes one or a combination of a pie chart content, a line chart content and a bar chart content of the image (4), and the chart recognition circuit (122) executes the chart recognition process on the image (4) to recognize the pie chart content, the line chart content and the bar chart content of the image (4).

6. The intelligent meeting assistance system (1) according to claim 3, wherein the image analysis process further includes an animation recognition process, and the image content includes one or a combination of the text content, the chart content and an animation content of the image (4).

7. The intelligent meeting assistance system (1) according to claim 6, wherein the image analyzing device (12) further includes:
an animation recognition circuit (123) configured to execute the animation recognition process on the image (4) to generate a third event record that records the animation content;
wherein the image analyzing device (12) is further configured to generate the first meeting minutes that record the image content based on the first event record, the second event record and the third event record.

8. The intelligent meeting assistance system (1) according to claim 7, further comprising:
an audio input device (13) configured to generate audio data during the meeting; and
an audio analyzing device (14) coupled to the audio input device (13), wherein the audio analyzing device (14) is configured to execute an audio analysis process on the audio data to generate second meeting minutes that record a plurality of records of speech content.

9. The intelligent meeting assistance system (1) according to claim 8, wherein the image capturing device (11) is further configured to sequentially capture multiple ones of the image (4) displayed by the interactive device (2) during the meeting, and the image analyzing device (12) generates the first meeting minutes that separately records multiple ones of the image content.

10. The intelligent meeting assistance system (1) according to claim 9, wherein the image analyzing device (12) is further configured to add a timestamp (St1, St2, St3, St4, St5) to each of the multiple ones of the image content recorded in the first meeting minutes, and the audio analyzing device (14) is further configured to add the timestamp (St1, St2, St3, St4, St5) to each of the plurality of speech contents recorded in the second meeting minutes.

11. The intelligent meeting assistance system (1) according to claim 10, further comprising:
an artificial intelligence processing circuit (16) coupled to the image analyzing device (12) and the audio analyzing device (14), and receiving the first meeting minutes and the second meeting minutes, wherein the artificial intelligence processing circuit (16) is configured to integrate the first meeting minutes and the second meeting minutes, and input meeting minutes that is integrated into a natural language processing and machine learning model to analyze and generate third meeting minutes.

12. A method for generating meeting minutes, the method **characterized by** comprising following processes:
configuring an image capturing device (11) to capture an image (4) displayed by an interactive device (2) during a meeting; and
configuring an image analyzing device (12) to execute an image analysis process on the image (4) to generate first meeting minutes that record image content.

13. The method according to claim 12, wherein the image content includes one or a combination of a text content and a chart content of the image (4), the image analysis process includes a text recognition process and a chart recognition process, and the processes of configuring the image analyzing device (12) to perform the image analysis process on the image (4) includes:
configuring an optical character recognition circuit (121) to perform the text recognition process on the image (4) to generate a first event record that records the text content; and
configuring a chart recognition circuit (122) to execute the chart recognition process on the image (4) to generate a second event record that records the chart content,
wherein the image analysis process further includes an animation recognition process, and the image content includes one or a combination of the text content, the chart content and an animation content of the image (4).

14. The method according to claim 13, wherein the processes of configuring the image analyzing device (12) to execute the image analysis process on the image (4) further includes:
configuring an animation recognition circuit (123) to execute the animation recognition process on the image (4) to generate a third event record that records the animation content; and
configuring the image analyzing device (12) to generate the first meeting minutes that record the image content based on the first event record, the second event record and the third event record,
wherein the method further comprises the following processes:
configuring an audio input device (13) to generate audio data during the meeting; and
configuring an audio analyzing device (14) to execute an audio analysis process on the audio data to generate second meeting minutes that record a plurality of records of speech content.

15. The method according to claim 14, wherein the image capturing device (11) is further configured to sequentially capture multiple ones of the image (4) displayed by the interactive device (2) during the meeting, and the image analyzing device (12) generates the first meeting minutes that separately record multiple ones of the image content,
wherein the image analyzing device (12) is further configured to add a timestamp (St1, St2, St3, St4, St5) to each of the multiple ones of the image content recorded in the first meeting minutes, and the audio analyzing device (14) is further configured to add the timestamp (St1, St2, St3, St4, St5) to each of the plurality of speech contents recorded in the second meeting minutes, and
wherein the method further comprises the following processes:
configuring an artificial intelligence processing circuit (16) to integrate the first meeting minutes and the second meeting minutes, and input meeting minutes that is integrated into a natural language processing and machine learning model to analyze and generate third meeting minutes.
